# EUROPEAN PATENT SPECIFICATION

(11) **EP 1 385 317 B1**
(45) Date of publication and mention of the grant of the patent: **26.12.2007**
(21) Application number: 02291845.2
(22) Date of filing: 22.07.2002
(51) Int. Cl.: H04L 29/14, H04L 29/06

(54) **Application persistence in a wireless communication network**
Applikation persistenz in drahflosen Netzen
Application de persistance dans un réseau sans fil

(43) Date of publication of application: 28.01.2004
(73) Proprietor: MOTOROLA, INC., Schaumburg, IL 60196 (US)
(72) Inventor: Lhuillier, Nicolas, 78310 Coignière (FR); Picault, Jérôme, 75014 Paris (FR); Bouzid, Makram, 91120 Palaiseau (FR)
(74) Representative: Cross, Rupert Edward Blount

(56) References cited:
- WO-A-00/68864
- WO-A-01/60022
- WO-A-01/86440
- US-A- 5 890 963

## Description

### Technical Field

This invention relates to the remote storage of data. The invention is applicable to, but not limited to, the remote storage of application operation data for wireless communication devices to ensure persistence of the application.

### Background

New and future wireless handheld communication devices are expected to support an ever increasing number of more advanced user-oriented applications (e.g. on-line games, shared agendas, etc).

Most of these applications will utilise the communication capabilities of the device to interact with applications on other devices. Most of these applications will also need a persistence mechanism, viz., a means to periodically store their state in order to ensure:
i) Personalisation of the application;
ii) Fault tolerance;
iii) Recovery from (soft or hard) system halt;
iv) Recovery from network connection loss.

The state of an application can be defined as a set of objects (for object-oriented applications), or more generally a set of variables that are sufficient to entirely describe the execution context (i.e. operation) of the application.

Normally, an application may be expected to store its states on the devices local memory. However, for wireless handheld communication devices, this solution is undesirable, as:
i) Storage capacity on mobile devices is very limited;
ii) Storage capacity on mobile devices is expensive when compared to typical computer storage;
iii) Storage capacity may vary between devices, making it difficult to anticipate availability;
iv) The typical user changes their device roughly every 18 months, but there is currently no means to transfer application states between devices.

Thus there is a need to provide some alternative to the solution of local storage on the wireless handheld communication device. Preferably such a solution should solve the issues of application recovery and data transfer in as transparent and efficient a manner as possible.

Patent specification US6295611 B1 (Method and System for Software Recovery, Sun Microsystems Inc.) describes a mechanism to enable recovery of the state of an object-oriented software environment after a system halt. The mechanism stores objects (modular code blocks), but relies on the facility to reconstruct the state of the system once these blocks have been recovered. The mechanism assumes an object-oriented environment.

This requires considerable modification of the application to facilitate reconstruction and explicity does not store the current (pre-failure) state of every block.

Patent specification WO0160022 A1 (Wireless Information Device Running Multiple Interactive Applications, Symbian Ltd.) describes a mechanism consisting of two or more applications running on the same device or on different wireless devices, communicating through an unreliable means. The mechanism relies on the use of a software server on the device or devices to store state information locally on the device. This fails to address the problem of memory limitations within a mobile device, making restoration of states for multiple applications difficult.

US patent no. 5,890,963 discloses a system for playing a game in a computer network having a server which infers and maintains the current state of a game from initial data and data received from the clients (players). The entire data set (player data, other player's data and external data) can be kept so that the state of a previous game can be retrieved from the saved game data and the game rules. In this US patent, the game is played on the server and all game-state modifications must be calculated on the game server.

### Summary of the Invention

The present invention provides a wireless communication system, a wireless device and a method of wireless communication, as described in the accompanying claims.

### Brief description of the drawings

Fig. 1 shows a wireless communication system in accordance with an embodiment of the present invention, given by way of example, comprising at least two wireless devices, wirelessly connected via a mediator.
Fig. 2 shows a flowchart describing the operation of an application or application monitor and the mediator in the system of Figure 1.
Fig. 3 shows a flowchart describing further operations of the mediator in the system of Figure 1.

### Detailed description of the preferred embodiment

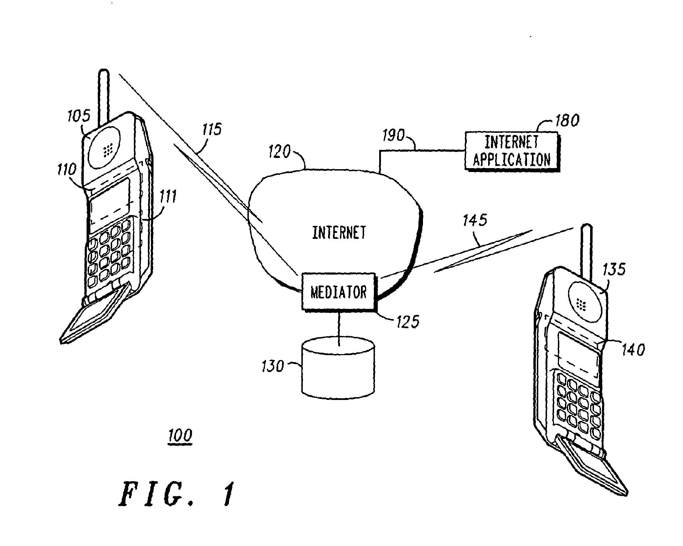

As shown in Figure 1, a preferred embodiment of the invention utilises a component of a network that is acting as a gateway or proxy (referred to herein as a mediator) 125 that is adapted to manage the persistent storage of the operating states of a first software program (hereinafter referred to as an application) 110 running on a wireless handheld communication device 105. The mediator is adapted to interpret communications from a second application 140 that affect the operation of the first application (hereinafter termed a 'remote event'), and to receive information via the device 105 concerning interaction or communications local to the first application that affect the operation of the first application (hereinafter termed a 'local event'). Local events may include user interactions, communications from the host device 105 or from another application running on the same device 105. Using these events (both remote and local) the mediator can infer the operating state of the application, and this can be stored in a storage means 130, accessible by a key stored both on the device 105 and the mediator 125 and/or storage means 130. By storing the operating state of the application, it is made robust to system failures and enables simple transference of the information to different copies of the application.

The invention thus
i) enables the persistence of numerous and complex applications by overcoming the storage limitations of handheld devices;
ii) provides a degree of independence between the storage of the application state and the device, allowing the same application state to be recalled on different devices;
iii) requires little of the user, who at most may have to enter a key when wishing to transfer states between devices;
iv) is efficient, requiring the additional transmission only of events local to the application;
v) can be immediately integrated within existing network architectures.

In the present invention, it is assumed that the first application has established a peer-to-peer communication with at least a second application (for example 140 or 180) through a network connection (for example 115 and 145, or 115 and 190). This assumption considers that most added value applications (e.g. games, shared agenda) need to exchange information, and that the peer-to-peer communication model is gaining more and more acceptance due to its suitability with networking issues (e.g. distributed object programming). It is further assumed that the second application may be connected to the network by any suitable means.

To facilitate the aforesaid peer-to-peer communication requires a mediator for at least one the following reasons:
i) there is no server (e.g. serversocket) service on the wireless device;
ii) there is a firewall on the wireless operator network, which prevents incoming access to the wireless device;
iii) the wireless connection to the device may intermittent, and the mediator helps to maintain the connection between both devices.

The present invention utilises the existence of communication via the mediator to store the state of the application not on the device, but on storage means (e.g. a database) located either with the mediator or somewhere else in the network, where storage constraints are less critical.

This solution is particularly suited to devices using always-connected protocols (e.g. GPRS) where the communication costs become negligible in comparison to the storage-media costs on small devices, but it should be clear to a person skilled in the art that the present invention could also operate on other wireless protocols.

To obtain knowledge of the state of the first application, one can infer the behaviour of the first application from a given state (e.g. the initial state), together with information regarding those external events that affect the first application and cannot be inferred themselves (e.g. remote events such as communications from the second application, or local events such as user interactions or communications from the device or other applications on the device).

In the preferred embodiment, the mediator already has access to all remote events, as it acts to pass them between the second and first applications. Consequently all that is required to infer knowledge of the state of the application is that the mediator receives information describing the local events.

To provide the mediator with information describing the local events, the application may be adapted to enable transmission of local event information to the mediator.

In an alternative embodiment, the mediator may receive information from an application monitor provided to enable transmission of local event information pertaining to the first application, the first application possibly being one of a plurality of applications on the device being monitored in this fashion by the application monitor.

In the preferred embodiment when the first application is started for the first time, contact is made with the mediator. The mediator knows in advance the form of the data and states required by the application for storage, though to a person skilled in the art that it will be apparent that there is scope for specific storage requirements to be requested by the application or application monitor at this point.

The mediator or storage means then issues a unique key. An application with this key will have its state information stored in a storage space uniquely corresponding to that key. The key is stored both by the device and by the mediator and/or storage means.

On subsequent runs of the application (either instigated by the user or automatically restarted after a system halt or lost network connection), the key is transmitted from the device to the mediator, which then facilitates recall of the state of the application, transmitting the state information back to the device.

In the preferred embodiment, the key is a simple alphanumeric sequence. This enables the user to enter the sequence on another device that contains a copy of the application, and effectively transfer the state of the first application to a subsequent copy operating on a separate device.

It is within the contemplation of the invention that other methods of transfer may be implemented, instead of or as well as that above. Examples include:
i) Storing keys on the SIM of the device, to be transferred between devices;
ii) Storing keys with the network provider, to be accessed by any device registered with the same user.

In each instance the transfer of a plurality of keys is simplified. Note also that transferring keys may also provide means by which to automatically transfer subscriptions to services etc., received by applications on each device, simplifying administration for the network provider.

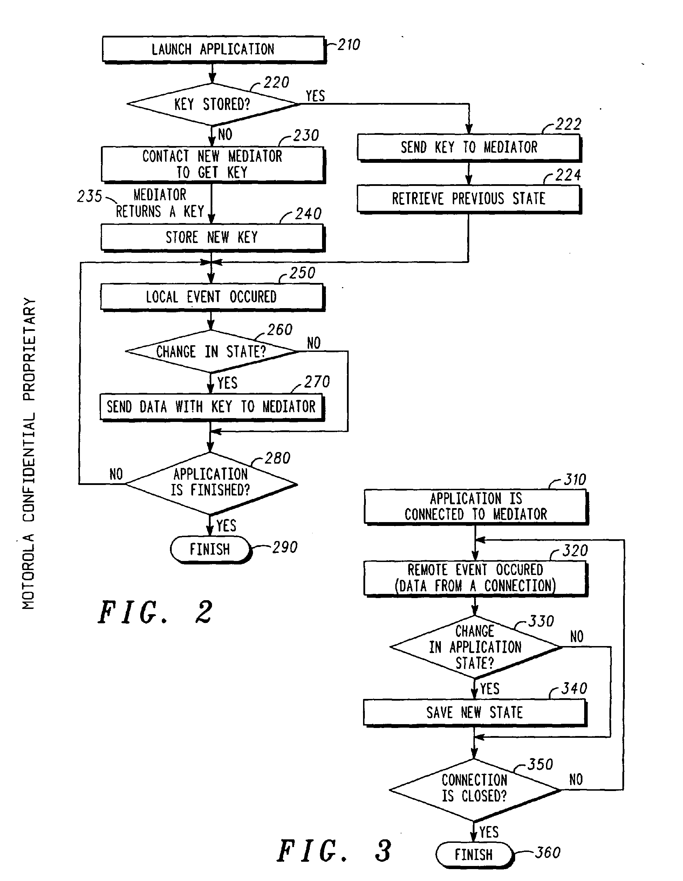

With reference to figure 2, a flowchart of the operation of an application or application monitor and the mediator in the preferred embodiment is now described.

The flowchart commences with the launch of the application, as shown in step 210. The application or application monitor determines if a key has been stored in step 220. If a key has been stored, the key is transmitted to the mediator in step 222 and the state information is returned by the mediator in step 224. If a key has not been stored, contact is made to a mediator in step 230, which issues a new key for first use of the application in step 235. This key is stored in step 240.

The application or application monitor then awaits the occurrence of a local event, in step 250. A decision is made at step 260 whether the local event resulted in a change of state. If so, data pertaining to the local event is transmitted to the mediator in step 270. Step 280 then loops back to step 250 until the application terminates at step 290.

With reference to figure 3, a flowchart of the additional operations of the mediator in the preferred embodiment is now described.

In addition to those operations described in the flowchart of figure 2, the mediator also operates as follows:

The flowchart commences with the connection of the application or application monitor, as shown in step 310. The mediator interprets communications from the second application to identify any remote events in step 320. The mediator infers any change in state due to the remote event in step 330. If a change is determined to have occurred, the inferred change of state is stored in the storage means in step 340. Step 350 then loops back to step 320 until the application disconnects at step 360.

## Claims

1. A wireless communication system (100) comprising a wireless device (105), a first application (110) for operating on said wireless device (105) in communication with at least a second application (140) over a wireless network link (115), the wireless network link connecting to a network comprising at least one mediator (125),
**characterised in that**:
in use, the first application (110) is arranged to be in peer-to-peer communication with the second application (140);
the system is arranged such that communications between the first (110) and second (140) applications pass through the mediator (125); and
said mediator comprises routing means for routing to a storage means (130) information for use in restoring an operating state of the first application and retrieving said information as required.

2. A wireless communication system (100) according to claim 1 wherein said routing means is arranged to route to said storage means (130) information sufficient to restore said operating state of the first application (110).

3. A wireless communication system (100) according to claim 1 or 2 wherein said mediator (125) is arranged to transmit to said wireless device, as required, information stored in said storage means (130) for use in restoring said operating state of the first application (110).

4. A wireless communication system (100) according to any preceding claim wherein said mediator (125) comprises said storage means (130).

5. A wireless communication system (100) according to any preceding claim wherein the first application (110) is arranged to send information to the mediator (125) regarding events acting upon the first application (110) instigated by the user, by the wireless device (105) upon which the first application (110) is operating, or by another application (111) upon the same device (105).

6. A wireless communication system (100) according to any preceding claim and comprising a monitoring application (111) operating on the same wireless device (105) as the first application (110) for sending information to the mediator (125) regarding events acting upon the first application (110) instigated by the user, by the wireless device (105) upon which the first application is operating, or by another application (111) upon the same wireless device (105).

7. A wireless communication system (100) according to any preceding claim, wherein the mediator (125) is responsive to information regarding events acting upon the first application instigated by the user, by the wireless device (105) upon which the first application is operating, or by another application (111) upon the same wireless device (105).

8. A wireless communication system (100) according to any preceding claim, wherein the mediator (125) is further adapted to extract information regarding events acting upon the first application (110) instigated by the second application (140) via the network.

9. A wireless communication system (100) according to any preceding claim, wherein the mediator (125) is arranged to infer from successive events the operating state of the first application (110).

10. A wireless communication system (100) according to any preceding claim, wherein said storage space allocated for the state information of the first application (110) is uniquely identified by a key, the key being issued by the mediator (125) or by said storage means (130) upon the first use of the first application (110).

11. A wireless communication system (100) according to claim 10, wherein the key is stored both on the wireless device (105) and by the mediator (125) and/or storage means (130), the key then being used to identify stored state information within the storage means (130), for the purposes of access to said information and modification of said information on behalf of the first application or any similar application equipped with the key.

12. A wireless communication system (100) according to claims 10 or 11, wherein the key is a simple alphanumeric sequence.

13. A wireless device for use in a system as claimed in any preceding claim wherein said wireless device comprises said first application (110) for operating on said wireless device (105), said first application (110) being arranged in use to establish peer-to-peer communication with said seconde application (140) through said mediator (125), the wireless device (105) being arranged to send information to the mediator (125) regarding events local to the first application, acting the events upon the first application (110), the wireless device being further arranged to receive from the mediator (125) state information for use in restoring an operating state of the first application (110), the state information being dependent upon the information sent by the wireless device (105) to the mediator (125).

14. A wireless device according to claim 13, wherein the events local to the first application include events instigated by the user, by the wireless device (105) upon which the first application (110) is operating, or by another application (111) upon the same device (105).

15. A method of storing information pertaining to a first application (110), in communication with at least a second application (140) over a wireless network link (115), the wireless network link connecting to a network comprising at least one mediator (125), **characterised in that**:
in use, the first application (110) is arranged to be in peer-to-peer communication with the second application (140),
communications between the first (110) and second (140) applications pass through the mediator (125) and
the mediator (125) stores information used in restoring the operating state of the first application (110) by routing said information to a storage means (130) and retrieving said information as required.

16. A method of storing information pertaining to a first application according to claim 15, wherein said mediator (125) stores in said storage means (130) sufficient information to restore the operating state of the first application (110).

17. A method of storing information pertaining to a first application according to claim 15 wherein:
i) the mediator (125) extracts information regarding events acting upon the first application (110) instigated by the second application (140) through the network, and
ii) the mediator (125) receives information regarding events acting upon the first application (110) instigated by the user, by a wireless device (105) upon which the first application is operating, or by another application (111) upon the same wireless device (105).

## Patentansprüche

1. Drahtloses Kommunikationssystem (100), welches Folgendes aufweist: eine drahtlose Vorrichtung (105), eine erste Anwendung (110) zum Betreiben auf der drahtlosen Vorrichtung (105) in Kommunikation mit mindestens einer zweiten Anwendung (140) über eine drahtlose Netzwerkverbindung (115), wobei die drahtlose Netzwerkverbindung eine Verbindung mit einem Netzwerk herstellt, das mindestens einen Mittler (125) aufweist,
**dadurch gekennzeichnet, dass**
die erste Anwendung (110) bei Verwendung so angeordnet ist, dass sie in einer peer-to-peer bzw. direkten Kommunikation mit der zweiten Anwendung (140) steht;
das System so angeordnet ist, dass die Kommunikationen zwischen der ersten (110) und der zweiten (140) Anwendung durch den Mittler (125) laufen; und
der Mittler eine Routing- bzw. Leitvorrichtung aufweist, um Informationen zur Verwendung bei der Wiederherstelllung eines Betriebszustandes der ersten Anwendung und zum Abrufen der Informationen nach Bedarf an eine Speichervorrichtung (130) zu leiten.

2. Drahtloses Kommunikationssystem (100) nach Anspruch 1, **dadurch gekennzeichnet, dass** die Routing- bzw. Leitvorrichtung so angeordnet ist, dass sie Informationen an die Speichervorrichtung (130) leitet, die ausreichen, um den Betriebszustand der ersten Anwendung (110) wieder herzustellen.

3. Drahtloses Kommunikationssystem (100) nach einem der Ansprüche 1 oder 2, **dadurch gekennzeichnet, dass** der Mittler (125) so angeordnet ist, dass er in einer Speichervorrichtung (130) gespeicherte Informationen nach Bedarf an die drahtlose Vorrichtung überträgt, wobei die Informationen zur Wiederherstellung des Betriebszustandes der ersten Anwendung (110) verwendet werden.

4. Drahtloses Kommunikationssystem (100) nach einem der vorhergehenden Ansprüche, **dadurch gekennzeichnet, dass** der Mittler (125) die Speichervorrichtung (130) aufweist.

5. Drahtloses Kommunikationssystem (100) nach einem der vorhergehenden Ansprüche, **dadurch gekennzeichnet, dass** die erste Anwendung (110) so angeordnet ist, dass sie über die drahtlose Vorrichtung (105), auf welcher die erste Anwendung (110) läuft oder über eine weitere Anwendung (111), die auf derselben Vorrichtung läuft, Informationen hinsichtlich von dem Benutzer eingeleiteten, auf die erste Anwendung (110) wirkenden, Ereignissen an den Mittler (125) sendet.

6. Drahtloses Kommunikationssystem (100) nach einem der vorhergehenden Ansprüche, welches eine Überwachungsanwendung (111) aufweist, die auf derselben drahtlosen Vorrichtung (105) wie die erste Anwendung (110) läuft, um Informationen hinsichtlich Ereignissen, die auf die erste Anwendung (110) wirken, welche durch den Benutzer, durch die drahtlose Vorrichtung (105), auf der die erste Anwendung läuft, oder durch eine weitere Anwendung (111) auf derselben drahtlosen Vorrichtung (105) eingeleitet werden, zu senden.

7. Drahtloses Kommunikationssystem (100) nach einem der vorhergehenden Ansprüche, **dadurch gekennzeichnet, dass** der Mittler (125) ansprechend auf Informationen hinsichtlich Ereignissen, die auf die erste Anwendung (110) wirken, welche durch den Benutzer, durch die drahtlose Vorrichtung (105), auf der die erste Anwendung läuft, oder durch eine weitere Anwendung (111) auf derselben drahtlosen Vorrichtung (105) eingeleitet werden, sendet.

8. Drahtloses Kommunikationssystem (100) nach einem der vorhergehenden Ansprüche, **dadurch gekennzeichnet, dass** der Mittler (125) des Weiteren so angeordnet ist, dass er Informationen hinsichtlich von der zweiten Anwendung (140) eingeleiteten, auf die erste Anwendung (110) wirkenden Ereignissen über das Netzwerk sendet.

9. Drahtloses Kommunikationssystem (100) nach einem der vorhergehenden Ansprüche, **dadurch gekennzeichnet, dass** der Mittler (125) so angeordnet ist, dass er den Betriebszustand der ersten Anwendung (110) aus aufeinanderfolgenden Ereignissen schlussfolgert.

10. Drahtloses Kommunikationssystem (100) nach einem der vorhergehenden Ansprüche, **dadurch gekennzeichnet, dass** der Speicherplatz, der den Zustandsinformationen der ersten Anwendung (110) zugeordnet ist, durch einen Schlüssel eindeutig identifiziert werden kann, wobei der Schlüssel bei der ersten Verwendung der ersten Anwendung (110) von dem Mittler (125) oder der Speichervorrichtung (130) ausgestellt wird.

11. Drahtloses Kommunikationssystem (100) nach Anspruch 10, **dadurch gekennzeichnet, dass** der Schlüssel sowohl auf der drahtlosen Vorrichtung (105) und durch den Mittler (125) und/oder die Speichervorrichtung (130) gespeichert wird, wobei der Schlüssel dann verwendet wird, um Zustandsinformationen innerhalb der Speichervorrichtung (130) zu Zugriffszwecken auf die Informationen und zur Modifikation der Informationen im Namen der ersten Anwendung oder jeder beliebigen ähnlichen Anwendung, die mit dem Schlüssel ausgestattet ist, zu identifizieren.

12. Drahtloses Kommunikationssystem (100) nach einem der Ansprüche 10 oder 11, **dadurch gekennzeichnet, dass** der Schlüssel eine einfache alphanumerische Sequenz ist.

13. Drahtloses Kommunikationssystem zur Verwendung in einem System nach einem der vorhergehenden Ansprüche, **dadurch gekennzeichnet, dass** die drahtlose Vorrichtung die erste Anwendung (110) zum Betreiben auf der drahtlosen Vorrichtung (105) aufweist, wobei die erste Anwendung (110) bei Verwendung so angeordnet ist, dass sie eine peer-to-peer bzw. direkte Kommunikation mit der zweiten Anwendung (140) durch den Mittler (125) aufbaut, wobei die drahtlose Vorrichtung (105) so angeordnet ist, dass sie Informationen hinsichtlich lokalen Ereignissen der ersten Anwendung an den Mittler (125) sendet, wobei die Ereignisse auf die erste Anwendung (110) wirken, wobei die drahtlose Vorrichtung des Weiteren angeordnet ist, um von dem Mittler (125) Zustandsinformationen zur Verwendung bei der Wiederherstellung eines Betriebszustands der ersten Anwendung (110) zu empfangen, wobei die Zustandsinformationen von den über die drahtlose Vorrichtung (105) an den Mittler (125) gesendeten Informationen abhängen.

14. Drahtlose Vorrichtung nach Anspruch 13, **dadurch gekennzeichnet, dass** die lokalen Ereignisse der ersten Anwendung von dem Benutzer, von der drahtlosen Vorrichtung (105), auf der die erste Anwendung (110) läuft, oder von einer weiteren Anwendung (111) auf derselben Vorrichtung (105) eingeleitete Ereignisse umfasst.

15. Verfahren zum Speichern von Informationen bezüglich einer ersten Anwendung (110), die über eine drahtlose Netzwerkverbindung (115) in Kommunikation mit mindestens einer zweiten Anwendung (140) steht, wobei die drahtlose Netzwerkverbindung eine Verbindung mit einem Netzwerk herstellt, das mindestens einen Mittler (125) aufweist, **dadurch gekennzeichnet, dass**
die erste Anwendung (110) bei Verwendung so angeordnet ist, dass sie in peer-to-peer bzw. direkter Kommunikation mit der zweiten Anwendung (140) steht;
Kommunikationen zwischen der ersten (110) und zweiten (140) Anwendung über den Mittler (125) laufen; und
der Mittler (125) zur Wiederherstellung des Betriebszustandes der ersten Anwendung (110) verwendete Informationen speichert, indem die Informationen an eine Speichervorrichtung (130) geleitet und die Informationen bei Bedarf abgerufen werden.

16. Verfahren zum Speichern von Informationen, die zu einer ersten Anwendung nach Anspruch 15 gehören, wobei der Mittler (125) in der Speichervorrichtung (130) ausreichende Informationen speichert, um den Betriebszustand der ersten Anwendung (110) wiederherzustellen.

17. Verfahren zum Speichern von Informationen, die zu einer ersten Anwendung gemäß Anspruch 15 gehören, wobei:
i) der Mittler (125) Informationen hinsichtlich durch die zweite Anwendung (140) eingeleitete, durch das Netzwerk auf die erste Anwendung (110) wirkende Ereignisse extrahiert; und
ii) der Mittler (125) Informationen hinsichtlich Ereignissen, die auf die erste Anwendung (110) wirken, welche durch den Benutzer, durch eine drahtlose Vorrichtung (105), auf der die erste Anwendung läuft, oder durch eine weitere Anwendung (111) auf derselben drahtlosen Vorrichtung (105) eingeleitet werden, empfängt.

## Revendications

1. Système de communication sans fil (100) comportant un dispositif sans fil (105), une première application (110) en vue d'une exploitation sur ledit dispositif sans fil (105) en communication avec au moins une seconde application (140) sur une liaison de réseau sans fil (115), la liaison de réseau sans fil étant connectée à un réseau comportant au moins un médiateur (125),
**caractérisé en ce que**:
en fonctionnement, la première application (110) est agencée afin d'être dans une communication de personne à personne avec une seconde application (140)
le système est agencé de sorte que des communications entre les première (110) et seconde (140) applications transitent par le médiateur (125); et
ledit médiateur comporte un moyen d'acheminement en vue d'acheminer vers un moyen de stockage (130) des informations à utiliser lors de la reprise d'un état de fonctionnement de la première application et de la récupération desdites informations le cas échéant.

2. Système de communication sans fil (100) selon la revendication 1 dans lequel ledit moyen d'acheminement est agencé en vue d'acheminer audit moyen de stockage (130) des informations suffisantes en vue de rétablir ledit état de fonctionnement de la première application (110).

3. Système de communication sans fil (100) selon la revendication 1 ou 2 dans lequel ledit médiateur (125) est agencé en vue de transmettre audit dispositif sans fil, selon les besoins, des informations stockées dans ledit moyen de stockage (130) en vue qu'elles soient utilisées en vue de rétablir ledit état de fonctionnement de la première application (110).

4. Système de communication sans fil (100) selon l'une quelconque des revendications précédentes dans lequel ledit médiateur (125) comporte ledit moyen de stockage (130).

5. Système de communication sans fil (100) selon l'une quelconque des revendications précédentes, dans lequel la première application (110) est agencée en vue d'envoyer des informations au médiateur (125) relativement à des événements agissant sur la première application (110) initiés par l'utilisateur, par le dispositif sans fil (105) sur lequel la première application (110) est exécutée, ou par une autre application (111) sur le même dispositif (105).

6. Système de communication sans fil (100) selon l'une quelconque des revendications précédentes et comportant une application de surveillance (111) exécutée sur le même dispositif sans fil (105) que la première application (110) en vue d'envoyer des informations au médiateur (125) relativement à des événements agissant sur la première application (110) initiés par l'utilisateur, par le dispositif sans fil (105) sur lequel la première application est exploitée, ou par une autre application (111) sur le même dispositif sans fil (105).

7. Système de communication sans fil (100) selon l'une quelconque des revendications précédentes, dans lequel le médiateur (125) est sensible à des informations relatives à des événements agissant sur la première application initiés par l'utilisateur, par le dispositif sans fil (105) sur lequel la première application est exécutée, ou par une autre application (111) sur le même dispositif sans fil (105).

8. Système de communication sans fil (100) selon l'une quelconque des revendications précédentes, dans lequel le médiateur (125) est en outre adapté pour extraire des informations relatives à des événements agissant sur la première application (110) initiés par la seconde application (140) via le réseau.

9. Système de communication sans fil (100) selon l'une quelconque des revendications précédentes, dans lequel le médiateur (125) est agencé en vue de déduire à partir d'événements successifs l'état de fonctionnement de la première application (110).

10. Système de communication sans fil (100) selon l'une quelconque des revendications précédentes, dans lequel ledit espace de stockage affecté aux informations d'état de la première application (110) est uniquement identifié par une clé, la clé étant émise par le médiateur (125) ou par ledit moyen de stockage (130) lors de la première utilisation de la première application (110).

11. Système de communication sans fil (100) selon la revendication 10, dans lequel la clé est stockée à la fois sur le dispositif sans fil (105) et par le médiateur (125) et/ou le moyen de stockage (130), la clef étant ensuite utilisée pour identifier des informations d'état stockées dans le moyen de stockage (130); en vue d'un accès auxdites informations et d'une modification desdites informations au nom de la première application ou d'une quelconque application similaire équipée de la clé.

12. Système de communication sans fil (100) selon les revendications 10 ou 11, dans lequel la clé est une simple séquence alphanumérique.

13. Dispositif sans fil destiné à être utilisé dans un système selon l'une quelconque des revendications précédentes, dans lequel ledit dispositif sans fil comporte ladite première application (110) en vue d'un exécution sur ledit dispositif sans fil (105), ladite première application (110) étant agencée en fonctionnement pour établir une communication de personne à personne avec ladite seconde application (140) via ledit médiateur (125), le dispositif sans fil (105) étant agencé en vue de transmettre des informations au médiateur (125) relativement à des événements locaux à la première application et les événements agissant sur la première application (110), le dispositif sans fil étant en outre agencé en vue de recevoir du médiateur (125) des informations d'état à utiliser pour la restauration d'un état de fonctionnement de la première application (110), les informations d'état étant dépendantes des informations transmises par le dispositif sans fil (105) au médiateur (125).

14. Dispositif sans fil selon la revendication 13, dans lequel les événements locaux à la première application inclus des événements initiés par l'utilisateur, par le dispositif sans fil (105) sur lequel la première application (110) est exécutée, ou par une autre application (111) sur le même dispositif (105).

15. Procédé de stockage d'informations relatives à une première application (110), en communication avec au moins une seconde application (140) sur une liaison de réseau sans fil (115), la liaison de réseau sans fil se connectant à un réseau comportant au moins un médiateur (125), **caractérisé en ce que**:
au cours de l'utilisation, la première application (110) est agencée afin d'être dans une communication de personne à personne avec la seconde application (140),
des communications entre les première (110) et seconde (140) applications transitent par le médiateur (125) et
le médiateur (125) stocke des informations utilisées dans le rétablissement de l'état de fonctionnement de la première application (110) en acheminant lesdites informations à un moyen de stockage (130) et en récupérant lesdites informations le cas échéant.

16. Procédé de stockage d'informations relatives à une première application selon la revendication 15, dans lequel ledit médiateur (125) stocke dans ledit moyen de stockage (130) des informations suffisantes en vue de rétablir l'état de fonctionnement de la première application (110).

17. Procédé de stockage d'informations relatives à une première application selon la revendication 15, dans lequel:
i) le médiateur (125) extrait des informations relatives à des événements agissant sur la première application (110) initiés par la seconde application (140) via le réseau, et
ii) le médiateur (125) reçoit des informations relatives à des événements agissant sur la première application (110) initiés par l'utilisateur, au moyen d'un dispositif sans fil (105), sur lequel la première application est exécutée, ou par une autre application (111) sur le même dispositif (105).
